(19) Europäisches Patentamt / European Patent Office / Office européen des brevets

(11) **EP 3 499 477 A1**

(12) **EUROPEAN PATENT APPLICATION**
published in accordance with Art. 153(4) EPC

(43) Date of publication:
**19.06.2019 Bulletin 2019/25**

(51) Int Cl.:
*G08B 25/04* (2006.01)          *A61G 12/00* (2006.01)
*G08B 21/04* (2006.01)          *G08B 25/00* (2006.01)
*H04N 7/18* (2006.01)

(21) Application number: **17839098.5**

(22) Date of filing: **29.06.2017**

(86) International application number:
**PCT/JP2017/023972**

(87) International publication number:
**WO 2018/030024 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.08.2016 JP 2016155577**

(71) Applicant: **Konica Minolta, Inc.**
**Tokyo 100-7015 (JP)**

(72) Inventors:
• **SHIMAMURA, Kenta**
  **Tokyo 100-7015 (JP)**
• **HAYATA, Keisuke**
  **Tokyo 100-7015 (JP)**
• **HORIE, Daisaku**
  **Tokyo 100-7015 (JP)**

(74) Representative: **Gille Hrabal**
**Brucknerstrasse 20**
**40593 Düsseldorf (DE)**

(54) **WATCH-OVER SYSTEM, WATCH-OVER DEVICE, WATCH-OVER METHOD, AND WATCH-OVER PROGRAM**

(57)     Provided is a monitoring system capable of more correctly detecting that a care receiver is in danger. The system is provided with a camera configured to photograph a subject, a storage unit configured to store layout information (124) for defining a dangerous location in a reference image acquired by photographing the subject, a person detection unit (150) configured to sequentially detect a person region representing a care receiver from a series of input images (60) acquired by successively photographing the subject from the same angle of view as the reference image, and a notification unit (160) configured to notify that the care receiver is in danger when a position condition that the person region overlaps with the dangerous location and a motionless condition that the care receiver is motionless for a predetermined time or more are satisfied.

FIG.8

EP 3 499 477 A1

**Description**

Technological Field

The present disclosure relates to a technique for monitoring behaviors of a care receiver such as an elderly person or a patient who needs nursing care.

Background

A monitoring system has been widely used in monitoring the behaviors of a care receiver who needs to be cared (such as an elderly person or a patient). The monitoring system is configured to detect that the care receiver is in danger such as the care receiver has fallen down, and notify a care giver of the danger, allowing the care giver to take care of the care receiver.

As an example of such a monitoring system, Japanese Laid-Open Patent Application No. 2000-207665 (PTL 1) discloses a fall detection device which is capable of correctly detecting the fall of a person. The fall detection device obtains a difference image by calculating the difference between time-series input images, and calculates the area of a difference region composed of pixels having a pixel value greater than a predetermined value. The fall detection device notifies that the person has fallen down when the area is greater than a predetermined threshold value. In other words, the fall detection device notifies that the person has fallen down when it detects a moving amount that will momentarily increase as the person falls down.

Citation List

Patent Literature

PTL 1: Japanese Laid-Open Patent Application No. 2000-207665

Summary

Technical Problem

The fall detection device disclosed in PTL 1 is configured to notify that a person has fallen down when a momentarily increased moving amount is detected. Thereby, even if a person simply stumbles over an object, the fall detection device may falsely alarm that the person has fallen down, which increases unnecessary burden on the care giver. Therefore, it is desired to provide a monitoring system capable of more correctly detecting that a care receiver is in danger.

The present disclosure has been made to solve the problems mentioned above, and according to one aspect, an object of the present disclosure is to provide a monitoring system capable of more correctly detecting that a care receiver is in danger. According to another aspect, an object of the present disclosure in is to provide a monitoring device capable of more correctly detecting that a care receiver is in danger. According to still another aspect, an object of the present disclosure is to provide a monitoring method capable of more correctly detecting that a care receiver is in danger. According to still another aspect, an object of the present disclosure is to provide a monitoring program capable of more correctly detecting that a care receiver is in danger.

Solution to Problem

According to one aspect, the monitoring system includes a photographing unit configured to photograph a subject, a storage unit configured to store information for defining a dangerous location in a reference image acquired by photographing the subject, a person detection unit configured to sequentially detect a person region representing a person from a series of input images acquired by successively photographing the subject from the same angle of view as the reference image, and a notification unit configured to notify that the person is in danger when a first condition that the person region overlaps with the dangerous location and a second condition that the person is motionless for a predetermined time or more are satisfied.

According to another aspect, the monitoring device is connected to a photographing unit configured to photograph a subject and includes a storage unit configured to store information for defining a dangerous location in a reference image acquired by photographing the subject, a person detection unit configured to sequentially detect a person region representing a person from a series of input images acquired by successively photographing the subject from the same angle of view as the reference image, and a notification unit configured to notify that the person is in danger when a first condition that the person region overlaps with the dangerous location and a second condition that the person is motionless for a predetermined time or more are satisfied.

According to another aspect, the monitoring method includes preparing information for defining a dangerous location in a reference image acquired by photographing a subject, sequentially detecting a person region representing a person from a series of input images acquired by successively photographing the subject from the same angle of view as the reference image, and notifying that the person is in danger when a first condition that the person region overlaps with the dangerous location and a second condition that the person is motionless for a predetermined time or more are satisfied.

According to another aspect, the monitoring program causes a computer to prepare information for defining a dangerous location in a reference image acquired by photographing a subject, sequentially detect a person region representing a person from a series of input images acquired by successively photographing the subject from the same angle of view as the reference image, and notify that the person is in danger when a first condition that the person region overlaps with the dangerous location and a second condition that the person is motionless for a predetermined time or more are satisfied.

Advantageous Effects of Invention

According to one aspect, it is possible to more correctly detect that the care receiver is in danger.
The foregoing and other objects, features, aspects and advantages of the present invention will become more apparent from the following detailed description of the present invention when taken in conjunction with the accompanying drawings.

Brief Description of the Drawings

Fig. 1 is a view illustrating exemplar devices included in a monitoring system;
Fig. 2 is a view illustrating an exemplar setting screen for setting a dangerous location;
Fig. 3 is a view illustrating an exemplar data structure of layout information;
Fig. 4 is a view illustrating a series of input images acquired by successively photographing a subject;
Fig. 5 is a graph illustrating temporal changes on the moving amount of a care receiver illustrated in Fig. 4;
Fig. 6 is a view illustrating a series of input images acquired by successively photographing a subject.
Fig. 7 is a graph illustrating temporal changes on the moving amount of a care receiver illustrated in Fig. 6;
Fig. 8 is a block view illustrating exemplar functional components in a monitoring device;
Fig. 9 is a conceptual diagram schematically illustrating a process of calculating the difference between two frames;
Fig. 10 is a view illustrating an input image indicating that a care receiver has fallen down;
Fig. 11 is a view illustrating that the care receiver is photographed differently in the input image due to the different positional relationship between the care receiver and the camera;
Fig. 12 is a view illustrating a method of calculating a distance between the camera and the care receiver;
Fig. 13 is a flowchart schematically illustrating a process executed by the monitoring device; and
Fig. 14 is a block view schematically illustrating a hardware configuration of the monitoring system.

Detailed Description of Embodiments

Hereinafter, each embodiment according to the present invention will be described with reference to the drawings. It should be noted that in the following description, the same part or component will be denoted by the same reference numeral and assigned with the same name and functions, the detailed description thereof will not be repeated.

[Devices Included in Monitoring System 500]

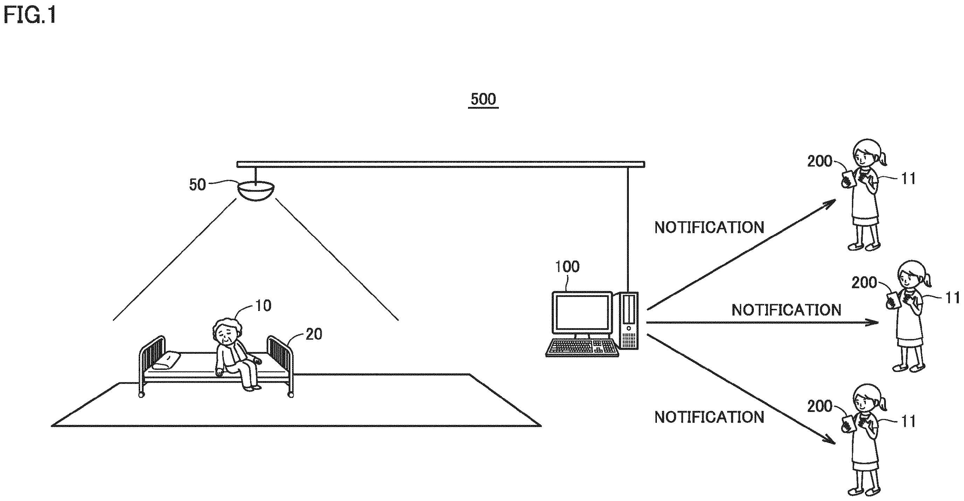

The devices included in a monitoring system 500 will be described with reference to Fig. 1. Fig. 1 is a view illustrating exemplar devices included in the monitoring system 500.
The monitoring system 500 is used in monitoring a care receiver 10 who needs to be monitored (monitoring subject). As illustrated in Fig. 1, the monitoring system 500 includes a camera 50 serving as a photographing unit, a monitoring device 100, and a portable terminal 200. The camera 50, the monitoring device 100 and the portable terminal 200 are connected via a network.
The camera 50 is installed in a nursing facility, a medical facility, a house or the like, for example. The camera 50 may be attached to the ceiling or the side wall. In the example of Fig. 1, the camera 50 is attached to the ceiling, and configured to photograph the care receiver 10 and a bed 20 from the ceiling. In one aspect, a near infrared camera may be used as the camera 50. The near infrared camera includes an infrared (IR) projector that projects near infrared light. By using a near infrared camera, it is possible to photograph the care receiver 10 even at night. In another aspect, a common camera that receives only visible light may be used as the camera 50. In another aspect, a 3D sensor or a thermographic sensor may be used as the camera 50.
The monitoring device 100 is configured to detect that the care receiver 10 is in danger based on a series of images (i.e., photographs) acquired by the camera 50. As an example, the detectable danger includes that the care receiver 10 has fallen down and that the care receiver 10 is in a dangerous location (for example, a bed fence).
When the monitoring device 100 detects that the care receiver 10 is in danger, it notifies the care giver 11 of the danger. As an example, the monitoring device 100 sends a notification indicating that the care receiver 10 is in danger to the mobile terminal 200 of the care giver 11. Upon receiving the notification, the mobile terminal 200 notifies the care giver 11 that the care receiver 10 is in danger via a message, a sound or the like. Thereby, it is possible for the care giver 11 to immediately understand that the care receiver 10 is in danger so as to take care of the care receiver 10 instantly.
Although the monitoring system 500 illustrated as an example in Fig. 1 is configured to include one camera 50, the monitoring system 500 may include a plurality of cameras 50. Further, although the monitoring system 500 illustrated as an example in Fig. 1 is configured to include one monitoring device 100, the monitoring system 500 may include a plurality of monitoring devices 100. Furthermore, although the camera 50 and the monitoring device 100 illustrated in Fig. 1 are fabricated as separate devices, the camera 50 and the monitoring device 100 may be fabricated integrally. Furthermore, although the monitoring system 500 illustrated as an example in Fig. 1 includes a plurality of mobile terminals 200, the monitoring system 500 may be configured to include one mobile terminal 200.

[Overview of Process for Detecting Danger]

The monitoring apparatus 100 according to the present embodiment is configured in advance to accept the setting of a location (hereinafter also referred to as "dangerous location") that may cause a danger to a care receiver in a reference image acquired by photographing the subject. The term "subject" as used herein refers to anything included in the field of view of the camera 50. In other words, the subject may include a person such as a care receiver and an object such as a bed or a floor.

As to be described in detail hereinafter, the monitoring device 100 according to the present embodiment determines that the care receiver has fallen down when the care receiver is motionless for a predetermined time or more in a dangerous location defined in the reference image, and notifies the care giver that the care receiver is in danger. As described, whether or not the care receiver is in danger is determined based on the dangerous location preliminarily defined in the reference image.

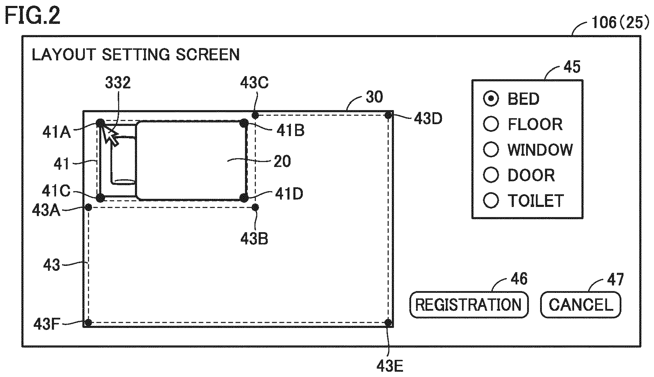

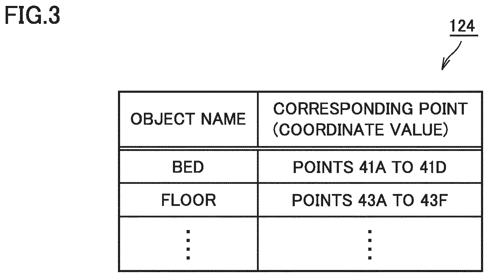

Hereinafter, an exemplary method for setting a dangerous location will be described with reference to Figs. 2 and 3. Fig. 2 is a view illustrating an exemplar setting screen 25 for setting a dangerous location.

As illustrated in Fig. 2, the monitoring device 100, upon receiving an operation for calling the setting screen 25, displays the setting screen 25 on a display 106. The setting screen 25 includes a reference image 30 acquired by photographing a subject, a selection section 45 for selecting various types of objects, a registration button 46, and a cancel button 47.

The selection section 45 is provided with, for example, a plurality of option buttons. Each option button is associated with an object that may cause danger to the care receiver. The administrator selects a target object from the objects listed in the selection section 45. Then, the administrator designates a dangerous location corresponding to the selected object on the reference image 30. For example, the dangerous location may be designated via mouse operation or touching operation. In the example of Fig. 2, the dangerous location may be designated by a cursor 332 moving in conjunction with the mouse.

When designating a bed region as the dangerous location, the administrator selects "bed" in the selection section 45, and then designates points 41A to 41D via mouse operation. The points 41A to 41D may be designated by, for example, clicking the mouse. Further, when designating a floor region as the dangerous location, the administrator selects "floor" in the selection section 45, and then designates points 43A to 43F via mouse operation. The points 43A to 43F may be designated by, for example, clicking the mouse.

When the registration button 46 is pressed, the dangerous location defined in the reference image 30 is stored as layout information 124 illustrated in Fig. 3. Fig. 3 is a view illustrating an exemplar data structure of the layout information 124. In the layout information 124, each object is associated with the coordinate values of a corresponding point designated in the reference image 30. In the example of Fig. 3, the object name "bed" is associated with the coordinate values of points 41A to 41D, and the object name "floor" is associated with the coordinate values of points 43A to 43F.

When the cancel button 47 is pressed, the monitoring device 100 closes the setting screen 25 without saving the settings made on the setting screen 25.

In the above, the description has been carried out by assuming that the bed and the floor are defined as the dangerous location, it should be noted that the other objects may be defined as the dangerous location. For example, a window or a toilet may be defined as the dangerous location.

[Process for Detecting Danger for Care Receiver]

In order to detect that a care receiver is in danger, the monitoring device 100 according to the present embodiment detects a person region where the care receiver is photographed from the input image. The monitoring device 100 notifies that the care receiver is in danger when a first condition (hereinafter also referred to as "position condition") that the person region in the input image overlaps with a dangerous location defined in the layout information 124 (see Fig. 3) and a second condition (hereinafter also referred to as "motionless condition") that the care receiver is motionless for a predetermined time or more are satisfied.

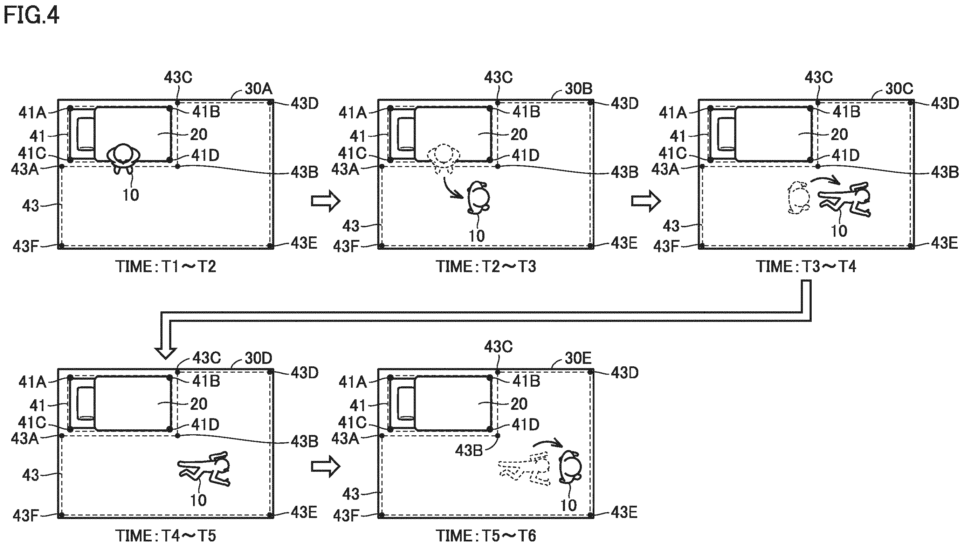

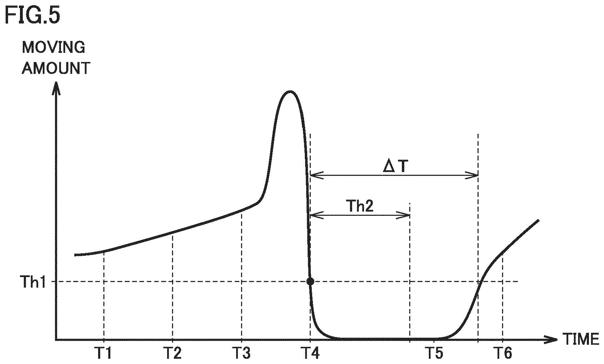

Hereinafter, with reference to Figs. 4 and 5, a process for detecting a danger for a care receiver will be described. Fig. 4 is a view illustrating a series of input images 30A to 30E acquired by successively photographing a subject. Fig. 5 is a graph illustrating temporal changes on the moving amount of a care receiver 10 illustrated in Fig. 4.

In a period from time T1 to time T2, the care receiver 10 is about to rise from the bed 20. During this period, since the care receiver 10 is making some movements, the moving amount of the care receiver 10 becomes greater than the predetermined value Th1. The predetermined value Th1 is set as a threshold for determining whether or not the care receiver 10 is motionless. The predetermined value Th1 may be set in advance or may be arbitrarily set by the administrator.

In a period from time T2 to time T3, the care receiver 10 is walking on the floor region 43. During this period, since the person region detected in the input image 30B overlaps with the floor region 43 defined as the dangerous location, the position condition is satisfied. However, since the moving amount of the care receiver 10 is greater than the predetermined value Th1, the motionless condition is not satisfied. Since both the position condition and the motionless condition are not satisfied, the monitoring device 100 determines that the care receiver is not in danger.

In a period from time T3 to time T4, the care receiver 10 has fallen down on the floor region 43. During this period, the moving amount of the care receiver 10 increases instantaneously and then becomes smaller than the predetermined value Th1.

In a period from time T4 to time T5, the care receiver 10 remains laying down on the floor region 43 motionlessly. If the damage caused by the fall is great, the care receiver 10 may be motionless for a while. Since the sequentially detected moving amount is equal to or less than the predetermined value Th1, the monitoring device 100 starts measuring a motionless time ΔT of the care receiver. When the motionless time ΔT becomes equal to or longer than a predetermined time Th2, the motionless condition that the care receiver is motionless for a predetermined time or more is satisfied. The predetermined time Th2 may be set in advance or may be arbitrarily set by the administrator.

Meanwhile, in the period from time T4 to time T5, since the person region detected in the input image 30 B overlaps with the floor region 43 defined as the dangerous location, the position condition is satisfied. Thus, in the period from time T4 to time T5, both the position condition and the motionless condition are satisfied, whereby the monitoring device 100 notifies that the care receiver is in danger.

As described above, the monitoring device 100 notifies that the care receiver 10 is in danger when the position condition (first condition) that the detected person region overlaps with the defined dangerous location and the motionless condition (second condition) that the care receiver is motionless for a predetermined time or more are satisfied.

In a period from time T5 to time T6, the care receiver 10 gets up and walks again. As a result, the moving amount of the care receiver 10 becomes greater than the predetermined value Th1.

In Fig. 4, the description has been carried out by assuming that the first condition is satisfied when the entire part of the person region overlaps with the floor region 43, it should be noted that the first condition is satisfied when a part of the person region overlaps with the floor region 43. In other words, the first condition is satisfied when a part or the entire part of the pixel group in the person region is included in the floor region 43.

Furthermore in Fig. 4, as an example that the care receiver 10 is in danger, the description has been carried out by assuming that the care receiver 10 has fallen down, it should be noted that the detectable danger is not limited to the fall of the care receiver 10. For example, the monitoring device 100 may determine that the care receiver 10 is in danger based on the bed region 41 defined as the dangerous location. As an example, when the care receiver 10 straddles a fence of the bed 20, the monitoring device 100 may determine that the care receiver 10 is taking a dangerous behavior, and thereby notify that the care receiver 10 is in danger. In this case, since the detected person region overlaps with the edge of the bed region 41, the position condition is satisfied. Since the fence is likely to be installed in the short side of the bed, it is preferably that the position condition is satisfied when the detected person region overlaps with the short side of the bed region 41. The short side of the bed region may be detected, for example, by image processing such as edge detection.

Preferably, the threshold value for the position condition (in other words, the predetermined value Th1) is different between the case where the danger detection is performed in the bed region 41 and the case where the danger detection is performed in the floor region 43. Likewise, the threshold value for the motionless condition (in other words, the predetermined time Th2) may be different between the case where the danger detection is performed in the bed region 41 and the case where the danger detection is performed in the floor region 43. Thus, by setting an optimum threshold value for each dangerous location, it is possible for the monitoring device 100 to more reliably reduce the possibility of falsely alarming that the care receiver 10 is in danger.

[Significance of Motionless Condition]

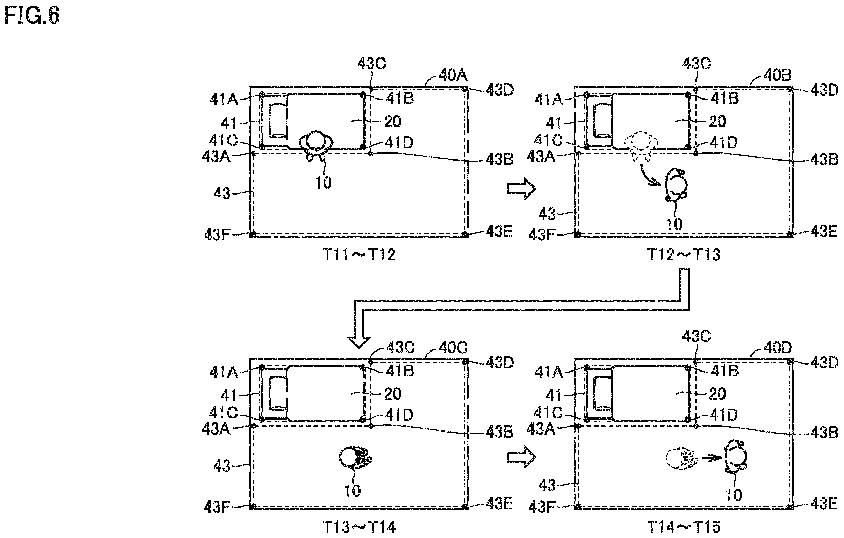

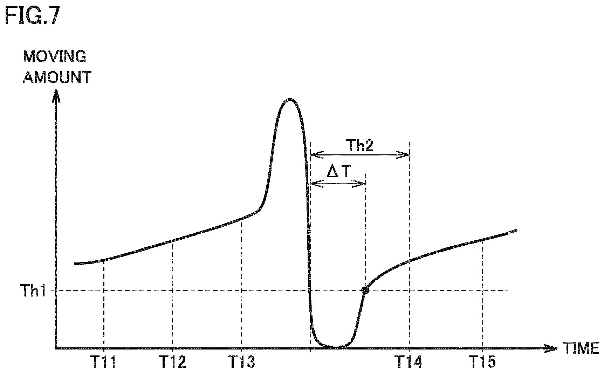

The significance of the motionless condition will be described with reference to Figs. 6 and 7. Fig. 6 is a view illustrating a series of input images 40A to 40D acquired by successively photographing the subject, and Fig. 7 is a graph illustrating temporal changes on the moving amount of the care receiver 10 illustrated in Fig. 6. The movements of the care receiver 10 are the same as that described with reference to Fig. 4 except those made in a period from time T13 to time T14 illustrated in Figs. 6 and 7, and thereby the description thereof will not be repeated hereinafter.

In the period from time T13 to time T14, the care receiver 10 may be temporarily motionless due to reasons such as stumbling. During this period, the moving amount of the care receiver 10 instantaneously increases and then becomes smaller than the predetermined value Th1. After the stumbling, the care receiver 10 may resume normal moving immediately. Therefore, the moving amount of the care receiver 10 becomes greater than the predetermined value Th1 in a very shot time. In this case, since the motionless time ΔT is shorter than the predetermined time Th2, the motionless condition is not satisfied.

As described above, if the care receiver 10 is motionless for some reasons other than the fall, it is highly possible that the care receiver 10 may take some kind of movements immediately. By determining whether or not the motionless condition is satisfied, the monitoring device 100 may be prevented from falsely alarming that the care receiver 10 is in danger when the care receiver does not fall down, which makes it possible to reduce false alarms and relieve the care giver of unnecessary burdens.

[Functional Components of Monitoring Device 100]

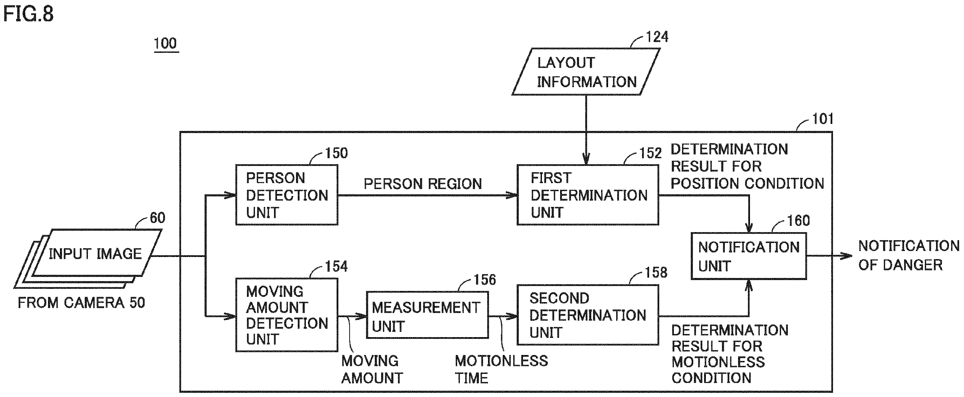

The functions of the monitoring device 100 will be described with reference to Fig. 8. Fig. 8 is a block view illustrating exemplar functional components of the monitoring device 100.

As illustrated in Fig. 8, the monitoring device 100 is equipped with a control device 101. The control device 101 includes a person detection unit 150, a first determination unit 152, a moving amount detection unit 154, a measurement unit 156, a second determination unit 158, and a notification unit 160 as functional components. These functional components will be explained in order hereinafter.

(Person Detection Unit 150)

The person detection unit 150 is configured to detect a person region representing a person from a series of input images 60 acquired by successively photographing the subject from the same angle of view as the reference image 30 (see Fig. 2) used for setting the dangerous location. In other words, the pixels with the same coordinate values in the reference image 30 and the input image 60 denote the same position.

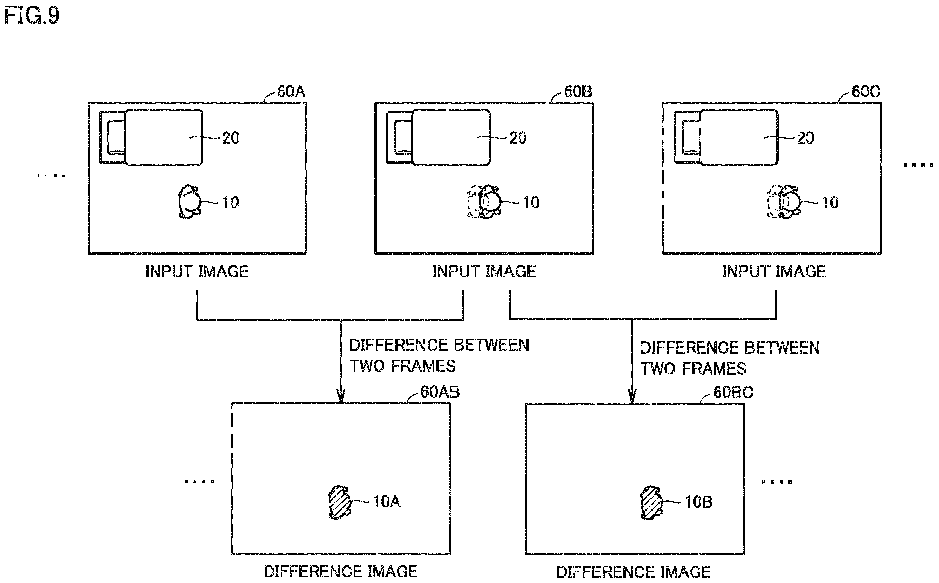

An exemplar person detecting process by the person detection unit 150 will be described with reference to Fig. 9. For example, the person detection unit 150 detects a person region by calculating the difference between two frames. Fig. 9 is a conceptual diagram schematically illustrating a process for calculating the difference between two frames.

In Fig. 9, input images 60A to 60C are illustrated as examples of the input image 60. The input images 60A to 60C are a series of images photographed at sequential times. Upon receiving the input images 60A and 60B from the camera 50, the person detection unit 150 calculates the difference between the input images 60A and 60B so as to obtain a difference image 60AB. The person detection unit 150 detects a group of pixels each having a pixel value equal to or greater than a predetermined value from the difference image 60AB, and extracts the group of pixels as a moving object. If the size of the extracted moving object is constrained within a predetermined threshold range, the person detection unit 150 sets the moving object as the person region 10A. The threshold range is defined by at least one of an upper limit and a lower limit. The threshold range may be appropriately adjusted in response to the positional relationship between the camera 50 and the care receiver 10.

Likewise, upon receiving input images 60B and 60C from the camera 50, the person detection unit 150 calculating the difference between the input images 60B and 60C so as to obtain a difference image 60BC. The person detection unit 150 detects a group of pixels each having a pixel value equal to or greater than a predetermined value from the difference image 60BC, and extracts the group of pixels as a moving object. If the size of the extracted moving object is constrained within a predetermined threshold range, the person detection unit 150 sets the moving object as the person region 10B.

In the above, the description has been carried out by assuming that a person region is detected by calculating the difference between two frames, it should be noted that the method for detecting a person region is not limited to calculating the difference between two frames. For example, the person detection unit 150 may detect a person region by an optical flow method, a tracking method or other image processing methods.

(First Determination Unit 152)

With reference to Fig. 8 again, the first determination unit 152 is configured to determine whether or not the position condition described above is satisfied. Whether or not the position condition is satisfied is determined based on the positional relationship between the person region detected by the person detection section 150 and the dangerous location defined in the reference image described above. More specifically, when the detected person region overlaps with the dangerous location, the first determination unit 152 determines that the position condition (first condition) is satisfied. It should be noted that the first determination unit 152 may determine that the position condition is satisfied when the entire person region overlaps with the dangerous location or when a part of the person region overlaps with the dangerous location.

Preferably, the first determination unit 152 is configured to determine whether or not the position condition is satisfied each time when a person region is detected by the person detection unit 150. As a result, it is possible to sequentially determine whether or not the position condition is satisfied. The determination result of the first determination unit 152 is output to the notification unit 160.

(Moving Amount Detection Unit 154)

The moving amount detection unit 154 is configured to sequentially detect the moving amount of the care receiver from a series of input images. Hereinafter, an exemplar moving amount detection process by the moving amount detection unit 154 will be described with reference to Fig. 9. The moving amount detection unit 154 detects the moving amount of the care receiver based on, for example, the difference image obtained by calculating the difference between two frames.

As described above, the difference image 60AB is obtained by calculating the difference between the input images 60A and 60B. The moving amount detection unit 154 counts pixels having a pixel value equal to or greater than the predetermined value from the difference image 60AB, and detects the counted number of the pixels as the moving amount. Similarly, the moving amount detection unit 154 counts pixels having a pixel value equal to or greater than the predetermined value from the difference image 60BC, and detects the counted number of the pixels as the moving amount. The detected moving amounts are sequentially output to the measurement unit 156.

In the above, the description has been carried out by assuming that the moving amount of the care receiver is detected based on the difference image obtained by calculating the difference between two frames, it should be noted that the moving amount of the care receiver may be detected by another method. For example, the moving amount detection unit 154 may detect a temporal change amount on the coordinate values of a person region detected by the person detection unit 150 as the moving amount of the care receiver. More specifically, the moving amount detection unit 154 sequentially acquires the coordinate values of a position in the person region (for example, the central point or the center of gravity of the person region) from the person detection unit 150, and calculates a temporal change amount on the coordinate values as the moving amount of the care receiver. Alternatively, the moving amount detection unit 154 may detect the moving amount of the care receiver by an optical flow method, a tracking method or other image processing methods.

(Measurement Unit 156)

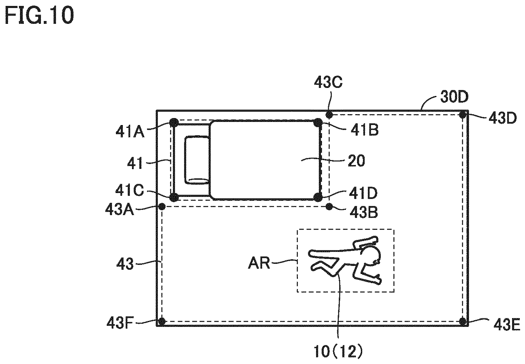

The measurement unit 156 is configured to measure the motionless time of the care receiver. Various methods may be used by the measurement unit 156 for measuring the motionless time. In the following, an exemplar method used by the measurement unit 156 for measuring the motionless time will be described with reference to Fig. 10. Fig. 10 is a view illustrating an input image 30D indicating that the care receiver 10 has fallen down.

When the moving amount of the care receiver sequentially detected is equal to or less than the predetermined value Th1, the measurement unit 156 defines an area AR including the person region in the input image 30D when the moving amount is equal to or less than the predetermined value Th1. The measurement unit 156 continues to measure the motionless time while the person region 12 sequentially detected thereafter is included in the area AR. The measurement unit 156 stops measuring the motionless time when the sequentially detected person region 12 overlaps with the area AR.

As described above, the area AR is set when the care receiver 10 is motionless, and the motionless time is continued to be measured while the care receiver 10 remains within the area AR. By measuring the motionless time by using the area AR as a reference, the motionless time is continued to be measured even though the care receiver 10 is active (for example, massaging his/her body) within the area AR.

As another method of measuring the motionless time, the measurement unit 156 continues measuring the motionless time while the moving amount of the care receiver 10 is equal to or less than the predetermined value Th1. In other words, the measurement unit 156 starts measuring the motionless time when the moving amount sequentially detected by the moving amount detection unit 154 is equal to or less than the predetermined value Th1 (see Fig. 5), and continues measuring the motionless time while the moving amount of the care receiver 10 in the area AR is equal to or less than the predetermined value Th1.

Preferably, the measurement unit 156 is configured to start measuring the motionless time when the sequentially detected moving amount has changed from a predetermined value Th3 which is greater than the predetermined value Th1 to a value which is equal to or less than the predetermined value Th1. When the care receiver falls down, the moving amount of the care receiver increases momentarily and then decreases, and thereby, by starting the measurement of the motionless time based on the predetermined values Th1 and Th3, it is possible to more correctly detect the fall of the care receiver.

(Second Determination Unit 158)

With reference to Fig. 8 again, the second determination unit 158 is configured to determine whether or not the motionless condition described above is satisfied. Whether or not the motionless condition is satisfied is determined based on the motionless time measured by the measurement unit 156. More specifically, the second determination unit 158 determines that the motionless condition (second condition) is satisfied when the measured motionless time is equal to or more than the predetermined time Th2 (see Fig. 5).

Preferably, the second determination unit 158 is configured to sequentially obtain the motionless time from the measurement unit 156, and determine that the motionless condition is satisfied when the sequentially obtained motionless time becomes equal to or greater than the predetermined time Th2. Thereby, it is possible to detect the fall of the care receiver instantly.

(Notification Unit 160)

The notification unit 160 is configured to notify that the care receiver is in danger when the above-described position condition (first condition) and the above-described second condition (second condition) are both satisfied,.

As an example of the notification method, the notification unit 160 sends a notification indicating that the care receiver 10 is in danger to the mobile terminal 200 (see Fig. 1) held by the care giver. Upon receiving the notification, the mobile terminal 200 notifies the care giver that the care receiver is in danger via a message, a sound or the like. Thereby, it is possible for the care giver to immediately understand that the care receiver is in danger so as to take care of the care receiver instantly.

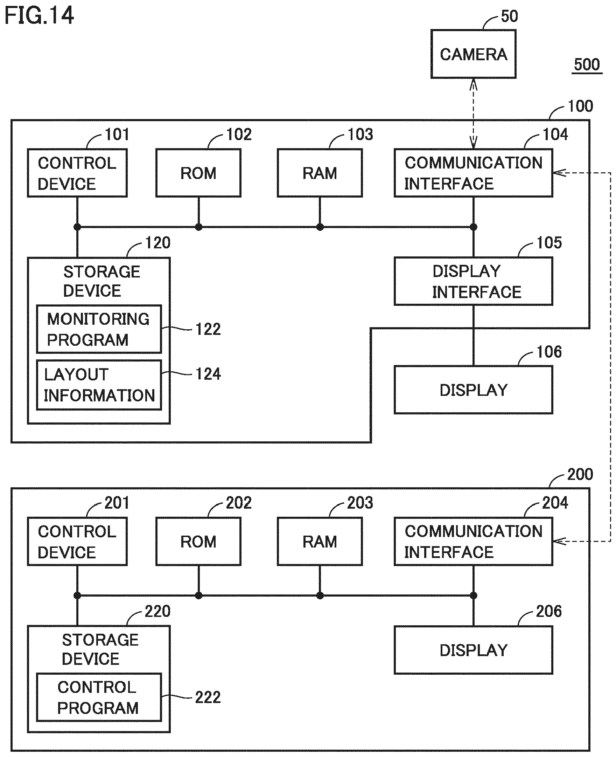

As another example of the notification method, the notification unit 160 causes the monitoring device 100 to display a message indicating that the care receiver is in danger on the display 106 (see Fig. 14). In addition, the notifying unit 160 may cause the monitoring device 100 to output a sound indicating that the care receiver is in danger via a speaker (not shown).

[Moving Amount Correcting Process]

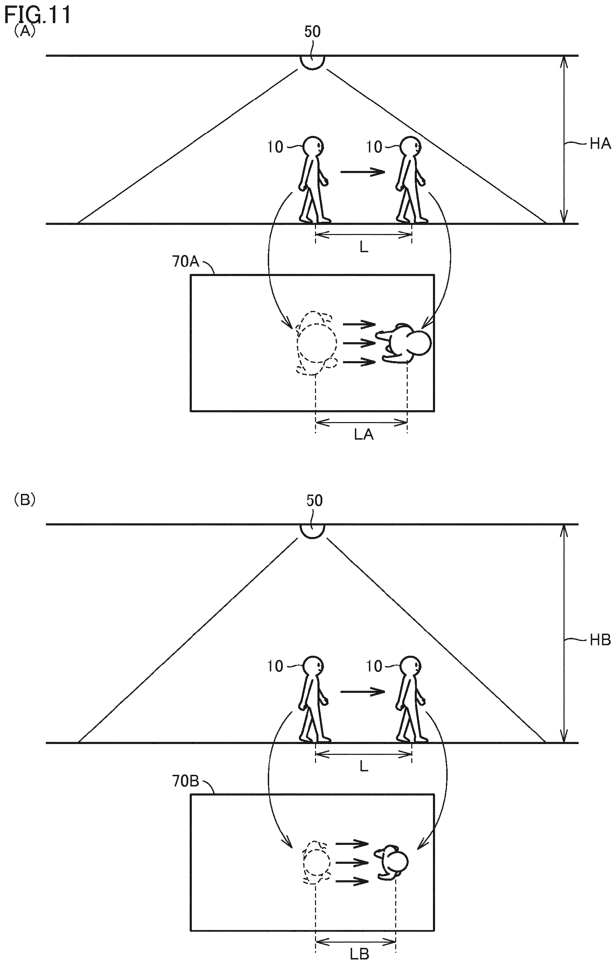

Fig. 11 is a view illustrating that the care receiver is photographed differently in the input image due to the different positional relationship between the care receiver 10 and the camera 50.

In Fig. 11(A), the camera 50 is installed at a position with a height HA from the ground, and in Fig. 11(B), the camera 50 is installed at a position with a height HB from the ground. The height HB is higher than the height HA. Under such condition, the care receiver 10 moves by a distance L.

As illustrated in Fig. 11, when the care receiver 10 actually moves by the distance L, the care receiver 10 is moving by a distance LA in the input image 70A, while in the input image 70 B, the care receiver 10 is moving by a distance LB. As described above, the moving amount of the care receiver 10 in the input images 70A and 70 B varies in response to the positional relationship between the camera 50 and the care receiver 10.

Therefore, the monitoring device 100 corrects the moving amount detected from the input image to the moving amount in the real space based on the installation information of the camera 50, and determines whether or not the motionless condition is satisfied based on the corrected moving amount. Thereby, it is possible for the monitoring device 100 to more correctly detect the danger to the care receiver.

Generally, the installation information of the camera 50 is set by the administrator at the time of installing the camera 50. The installation information may include, for example, the height of the ceiling, the height of the care receiver (for example, the height when the care receiver falls down and the body height of the care receiver), the photographing direction, and the like. In addition, the angle of view, the number of pixels, the distortion, the projection method or the like of the camera 50 may be set in the installation information. Moreover, the walking speed or the like of the care receiver may be set in the installation information. The settings set by the administrator are written, for example, in the layout information 124 (see Fig. 3) described above.

As an example, the monitoring device 100 may correct the moving amount by increasing the moving amount of the care receiver 10 in the input image as the distance between the camera 50 and the care receiver 10 is shorter. In other words, the monitoring device 100 may correct the moving amount by decreasing the moving amount of the care receiver 10 in the input image as the distance between the camera 50 and the care receiver 10 is longer.

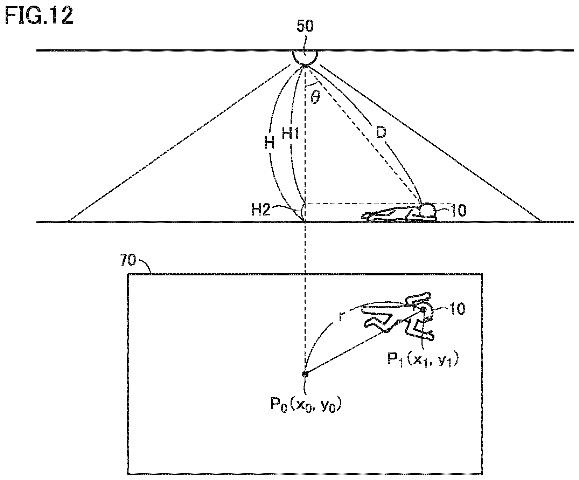

In order to perform the correction, the monitoring device 100 needs to calculate the distance between the camera 50 and the care receiver 10. Hereinafter, a method of calculating the distance between the camera 50 and the care receiver 10 will be described with reference to Fig. 12. Fig. 12 is a view for explaining a method of calculating a distance between the camera 50 and the care receiver 10.

First, the monitoring device 100 calculates an angle $\theta$ between the optical axis of the camera 50 and a direction along which the camera 50 is phogographing the care receiver 10 according to the following equations (1) and (2).

$$\theta = r \times \theta_0 \qquad (1)$$

$$r = sqrt\{(x_1 - x_0)^2 + (y_1 - y_0)^2\} \qquad (2)$$

"$\theta_0$" in equation (1) represents the angle of view per pixel in the input image 70. $\theta_0$ may be set in advance. "r" in equation (1) represents the distance between a point $P_0$ and a point $P_1$ in the input image 70. Point $P_0$ represents the center pixel in the input image 70. Point $P_1$ represents the position of the care receiver 10 in the input image 70. "$x_0$" in equation (2) represents the x coordinate of the point $P_0$ in the input image 70. "$y_0$" in equation (2) represents the y coordinate of the point $P_0$ in the input image 70. "$x_1$" in equation (2) represents the x coordinate of the point $P_1$ in the input image 70. "$y_1$" in equation (2) represents the y coordinate of the point $P_1$ in the input image 70.

The distance D between the camera 50 and the care receiver 10 is calculated according to the following equations (3) and (4).

$$D = H1/\cos\theta \qquad (3)$$

$$H1 = H - H2 \qquad (4)$$

"HI" in equation (3) represents the distance between the care receiver 10 and the camera 50 in the vertical direction. "H" in equation (4) represents the distance between the ground and the camera 50 in the vertical direction. "HI" in equation (4) represents the distance between the care receiver 10 and the camera 50 when the care receiver 10 falls down. "H2" represents the distance between the care giver 10 and the ground when the care receiver 10 falls down. "H" and "H2" in equation (4) are set by the administrator in advance. Alternatively, "HI" in equation (3) may be set by the administrator in advance.

[Control of Monitoring Device 100]

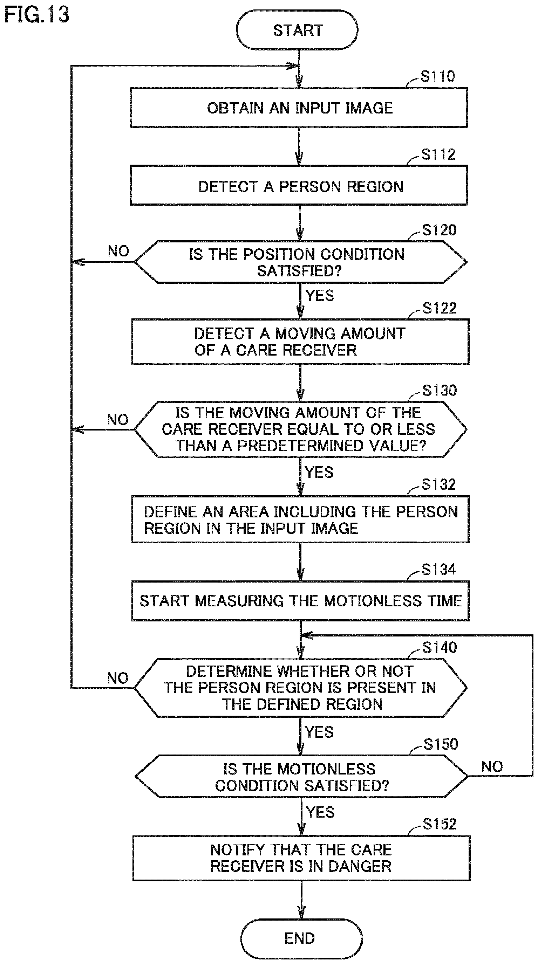

The control of the monitoring device 100 will be described with reference to Fig. 13. Fig. 13 is a flowchart schematically illustrating a process executed by the monitoring device 100. The process of Fig. 13 is implemented by causing the control device 101 (see Fig. 8) of the monitoring device 100 (computer) to execute a program. In another aspect, a part or the entire part of the process may be executed by a circuit element or other hardware.

In step S110, the control device 101 obtains an input image which is acquired by photographing the subject from the camera 50 (see Fig. 1). A new input image will be obtained every time when step S110 is executed.

In step S112, the control device 101 functions as the person detection unit 150 described above (see Fig. 8) to detect a person region representing the care receiver in the input image. The method of detecting a person region is described above with reference to Fig. 9.

In step S120, the control device 101 functions as the first determination unit 152 described above (see Fig. 8) to determine whether or not the above-described position condition is satisfied. The control device 101 determines that the position condition is satisfied when the person region detected in step S112 overlaps with the dangerous location defined in advance in the reference image 30 (see Fig. 2). When it is determined that the position condition is satisfied (YES in step S120), the control device 101 proceeds the process to step S122. Otherwise (NO in step S120), the control device 101 returns the process to step S110.

In step S122, the control device 101 functions as the moving amount detection unit 154 described above (see Fig. 8) to detect the moving amount of the care receiver. As an example, the control device 101 calculates the distance between the coordinates of the center of gravity of the person region detected at a previous time and the coordinates of the center of gravity of the person region detected at the current time as the moving amount of the care receiver.

In step S130, the control device 101 determines whether or not the moving amount of the care receiver is equal to or less than the predetermined value Th1 (see Fig. 5). When it is determined that the moving amount of the care receiver is equal to or less than the predetermined value Th1 (YES in step S130), the control device 101 proceeds the process to step S132. Otherwise (NO in step S130), the control device 101 returns the process to step S110.

In step S132, the control device 101 defines an area AR (see Fig. 10) including the person region in the input image representing the motionlessness of the care receiver.

In step S134, the control device 101 functions as the measurement unit 156 described above (see Fig. 8) to measure the motionless time of the care receiver.

In step S140, the control device 101 acquires a new input image and detects a person region from the input image. The control device 101 determines whether or not the newly detected person region is present in the area AR defined in step S132. When it is determined that the newly detected person region is present in the area AR (YES in step S140), the control device 101 proceeds the process to step S150. Otherwise (NO in step S140), control device 101 returns the process to step S110.

In step S150, the control device 101 functions as the second determination unit 158 described above (see Fig. 8) to determine whether or not the motionless condition is satisfied. When the motionless time is longer than the predetermined time Th2 (see Fig. 5), the control device 101 determines that the motionless condition is satisfied. When it is determined that the motionless condition is satisfied (YES in step S150), the control device 101 proceeds the process to step S152. Otherwise (NO in step S150), control device 101 returns the process to step S140.

In step S152, the control device 101 functions as the notification unit 160 (see Fig. 8) to notify that the care receiver is in danger.

[Hardware Configuration of Monitoring System 500]

An example of a hardware configuration of the monitoring system 500 will be described with reference to Fig. 14. Fig. 14 is a block view illustrating the main hardware configuration of the monitoring system 500.

As illustrated in Fig. 14, the monitoring system 500 is composed of the monitoring device 100 and the portable terminal 200 held by a care giver. The monitoring device 100 and the portable terminal 200 are connected to each other via a network.

Hereinafter, the hardware configuration of the monitoring device 100 and the mobile terminal 200 will be described in order.

(Hardware Configuration of Monitoring Device 100)

The monitoring device 100 includes a control device 101, a ROM (Read Only Memory) 102, a RAM (Random Access Memory) 103, a communication interface 104, a display interface 105, and a storage device 120.

The control device 101 is configured to control the monitoring device 100. The control device 101 is constructed by, for example, at least one integrated circuit. The integrated circuit is constructed by, for example, at least one CPU (Central Processing Unit), at least one ASIC (Application Specific Integrated Circuit), at least one FPGA (Field Programmable Gate Array), or a combination thereof.

The communication interface 104 is provided with an antenna (not shown) or the like. The monitoring device 100 exchanges data with external communication devices via the antenna. External communication devices include, for example, a camera 50, a portable terminal 200, a server, and the like. The monitoring device 100 may be configured to download a monitoring program 122 from the server via the antenna. The monitoring device 100 and the camera 50 may be constructed integrally, or may be constructed separately as illustrated in Fig. 14.

A display 106 is connected to the display interface 105. The display interface 105 is configured to output an image signal according to a command from the control device 101 or the like so as to display an image on the display 106. As an example, when it is detected that the care receiver is in danger, the display 106 displays a message, an image or the like indicating that the care receiver is in danger.

The storage device 120 is a storage medium such as a hard disk or an external storage device. The storage device 120 is configured to store the monitoring program 122, the layout information 124 (see Fig. 3) and the like. The storage of the monitoring program 122 and the layout information 124 is not limited to the storage device 120, they may be stored in a storage area (for example, a cache), the ROM 102 or the RAM 103 of the control device 101, or an external device (for example, a server), for example.

It should be noted that the monitoring program 122 may not be provided as a standalone program, it may be incorporated into an arbitrary program as a part. In this case, the process according to the present embodiment is implemented in cooperation with the arbitrary program. Even though the program does not include some of the modules, it is included within the scope of the monitoring program 122 according to the present embodiment. Further, some or all of the functions provided by the monitoring program 122 may be implemented by dedicated hardware. Furthermore, the monitoring device 100 may be configured as a so-called cloud service in which a part of the processing of the monitoring program 122 is executed by at least one server.

(Hardware Configuration of Mobile Terminal 200)

Hereinafter, with reference to Fig. 14, a hardware configuration of the mobile terminal 200 held by a care giver will be described.

As illustrated in Fig. 14, the mobile terminal 200 includes a control device 201, a ROM 202, a RAM 203, a communication interface 204, a display 206, and a storage device 220.

The control device 201 is configured to control the portable terminal 200. The control device 201 is constructed by, for example, at least one integrated circuit. The integrated circuit is constructed by, for example, at least one CPU, at least one ASIC, at least one FPGA, or a combination thereof.

The control device 201 controls the mobile terminal 200 by executing various programs such as the control program 222 of the mobile terminal 200. Upon receiving a command for executing the control program 222, the control device 201 retrieves the control program 222 from the storage device 220 to the ROM 202. The RAM 203 functions as a working memory which temporarily stores various data required to execute the control program 222.

The communication interface 204 is provided with an antenna (not shown) or the like. The portable terminal 200 exchanges data with external communication devices via the antenna. External communication devices include, for example, the monitoring device 100, a server, and the like. The monitoring device 100 may be configured to download the control program 222 from the server via the antenna.

When a signal indicating that the care receiver is in danger is received from the monitoring device 100, the display 106 displays a message, an image, or the like indicating that the care receiver is in danger. Preferably, the display 106 displays the room number and the name of the care receiver in danger as well as the type of danger (for example, a fall or the like).

The storage device 220 is a storage medium such as an eMMC (Embedded MultiMedia Card). As an example, the storage device 220 is configured to store the control program 222. The storage of the control program 222 is not limited to the storage device 220, it may be stored in, for example, a cache, the ROM 202 or the RAM 203 of the control device 201, or another communication device.

[Summary]

According to one aspect, the monitoring system includes a photographing unit configured to photograph a subject, a storage unit configured to store information for defining a dangerous location in a reference image acquired by photographing the subject, a person detection unit configured to sequentially detect a person region representing a person from a series of input images acquired by successively photographing the subject from the same angle of view as the reference image, and a notification unit configured to notify that the person is in danger when a first condition that the person region overlaps with the dangerous location and a second condition that the person is motionless for a predetermined time or more are satisfied.

Preferably, the dangerous location includes a floor region representing a floor. The first condition is satisfied when the person region overlaps with the floor region.

Preferably, the dangerous location includes a bed region representing a bed. The first condition is satisfied when the person region overlaps with an edge of the bed region.

Preferably, the monitoring system further includes a measurement unit configured to measure a motionless time during which the person is motionless. The second condition is satisfied when the motionless time is equal to or longer than the predetermined time.

Preferably, the monitoring system further includes a moving amount detection unit configured to sequentially detect a moving amount of the person from the series of input images. The measurement unit starts measuring the motionless time when the moving amount sequentially detected is equal to or less than a predetermined value.

Preferably, when the moving amount sequentially detected is equal to or less than the predetermined value, the measurement unit defines an area including a person region in an input image where the moving amount is equal to or less than the predetermined value, and continues measuring the motionless time while the person region sequentially detected is included in the area.

Preferably, the measurement unit continues measuring the motionless time while the moving amount sequentially detected is equal to or less than the predetermined value.

According to another aspect, the monitoring device is connected to a photographing unit configured to photograph a subject and includes a storage unit configured to store information for defining a dangerous location in a reference image acquired by photographing the subject, a person detection unit configured to sequentially detect a person region representing a person from a series of input images acquired by successively photographing the subject from the same angle of view as the reference image, and a notification unit configured to notify that the person is in danger when a first condition that the person region overlaps with the dangerous location and a second condition that the person is motionless for a predetermined time or more are satisfied.

According to another aspect, the monitoring method includes preparing information for defining a dangerous location in a reference image acquired by photographing a subject, sequentially detecting a person region representing a person from a series of input images acquired by successively photographing the subject from the same angle of view as the reference image, and notifying that the person is in danger when a first condition that the person region overlaps with the dangerous location and a second condition that the person is motionless for a predetermined time or more are satisfied.

According to another aspect, the monitoring program causes a computer to prepare information for defining a dangerous location in a reference image acquired by photographing a subject, sequentially detect a person region representing a person from a series of input images acquired by successively photographing the subject from the same angle of view as the reference image, and notify that the person is in danger when a first condition that the person region overlaps with the dangerous location and a second condition that the person is motionless for a predetermined time or more are satisfied.

Although embodiments of the present invention have been described and illustrated in detail, the disclosed embodiments are presented for the purpose of illustration and example without any limitation, the scope of the present invention should be interpreted by terms of the appended claims.

Reference Signs List

10: care receiver; 10A, 10B, 12: person region; 11: care giver; 20: bed; 25: setting screen; 30: reference image; 30A-30E, 40A-40D, 60, 60A-60C, 70, 70A-70B: input image; 41: bed region; 41A-41D, 43A-43F: point; 43: floor region; 45: selection section; 46: registration button; 47: cancel button; 50: camera; 60AB, 60BC: difference image; 100: monitoring device; 101, 201: control device; 102, 202: ROM; 103, 203: RAM; 104, 204: communication interface; 105: display interface; 106, 206: display; 120, 220: storage device; 122: monitoring program; 124: layout information; 150: person detection unit; 152: first determination unit; 154: moving amount detection unit; 156: measurement unit; 158: second determination unit; 160: notification unit; 200: portable terminal; 222: control program; 332: cursor; 500: monitoring system

**Claims**

1. A monitoring system comprising:

   a photographing unit configured to photograph a subject;
   a storage unit configured to store information for defining a dangerous location in a reference image acquired by photographing the subject;
   a person detection unit configured to sequentially detect a person region representing a person from a series of input images acquired by successively photographing the subject from the same angle of view as the reference image; and
   a notification unit configured to notify that the person is in danger when a first condition that the person region overlaps with the dangerous location and a second condition that the person is motionless for a predetermined time or more are satisfied.

2. The monitoring system according to claim 1, wherein the dangerous location includes a floor region representing a floor, the first condition is satisfied when the person region overlaps with the floor region.

3. The monitoring system according to claim 1 or 2, wherein
the dangerous location includes a bed region representing a bed,
the first condition is satisfied when the person region overlaps with an edge of the bed region.

4. The monitoring system according to any one of claims 1 to 3, wherein
the monitoring system further includes a measurement unit configured to measure a motionless time during which the person is motionless,
the second condition is satisfied when the motionless time is equal to or longer than the predetermined time.

5. The monitoring system according to claim 4, wherein
the monitoring system further includes a moving amount detection unit configured to sequentially detect a moving amount of the person from the series of input images,
the measurement unit starts measuring the motionless time when the moving amount sequentially detected is equal to or less than a predetermined value.

6. The monitoring system according to claim 5, wherein
when the moving amount sequentially detected is equal to or less than the predetermined value, the measurement unit defines an area including a person region in an input image where the moving amount is equal to or less than the predetermined value, and continues measuring the motionless time while the person region sequentially detected is included in the area.

7. The monitoring system according to claim 5, wherein
the measurement unit continues measuring the motionless time while the moving amount sequentially detected is equal to or less than the predetermined value.

8. A monitoring device connected to a photographing unit configured to photograph a subject, comprising:

a storage unit configured to store information for defining a dangerous location in a reference image acquired by photographing the subject;
a person detection unit configured to sequentially detect a person region representing a person from a series of input images acquired by successively photographing the subject from the same angle of view as the reference image; and
a notification unit configured to notify that the person is in danger when a first condition that the person region overlaps with the dangerous location and a second condition that the person is motionless for a predetermined time or more are satisfied.

9. A monitoring method comprising:

preparing information for defining a dangerous location in a reference image acquired by photographing a subject;
sequentially detecting a person region representing a person from a series of input images acquired by successively photographing the subject from the same angle of view as the reference image; and
notifying that the person is in danger when a first condition that the person region overlaps with the dangerous location and a second condition that the person is motionless for a predetermined time or more are satisfied.

10. A monitoring program to be executed on a computer, the monitoring program causing the computer to:

prepare information for defining a dangerous location in a reference image acquired by photographing a subject;
sequentially detect a person region representing a person from a series of input images acquired by successively photographing the subject from the same angle of view as the reference image; and
notify that the person is in danger when a first condition that the person region overlaps with the dangerous location and a second condition that the person is motionless for a predetermined time or more are satisfied.

FIG.1

# FIG.2

106(25)

LAYOUT SETTING SCREEN

332
43C
30
43D

45

- ⦿ BED
- ○ FLOOR
- ○ WINDOW
- ○ DOOR
- ○ TOILET

41A
41B
41
20
41C
41D
43A
43B
43

46
47

REGISTRATION  CANCEL

43F
43E

FIG.3

124

| OBJECT NAME | CORRESPONDING POINT (COORDINATE VALUE) |
|:---:|:---:|
| BED | POINTS 41A TO 41D |
| FLOOR | POINTS 43A TO 43F |
| ⋮ | ⋮ |

FIG.4

TIME:T1~T2

TIME:T2~T3

TIME:T3~T4

TIME:T4~T5

TIME:T5~T6

EP 3 499 477 A1

FIG.5

FIG.6

T11〜T12

T12〜T13

T13〜T14

T14〜T15

EP 3 499 477 A1

FIG.7

FIG.8

100

124 LAYOUT INFORMATION

101

150 PERSON DETECTION UNIT

PERSON REGION

152 FIRST DETERMINATION UNIT

DETERMINATION RESULT FOR POSITION CONDITION

60 INPUT IMAGE

FROM CAMERA 50

154 MOVING AMOUNT DETECTION UNIT

MOVING AMOUNT

156 MEASUREMENT UNIT

MOTIONLESS TIME

158 SECOND DETERMINATION UNIT

160 NOTIFICATION UNIT

NOTIFICATION OF DANGER

DETERMINATION RESULT FOR MOTIONLESS CONDITION

EP 3 499 477 A1

FIG.9

60A

20

10

INPUT IMAGE

60B

20

10

INPUT IMAGE

60C

20

10

INPUT IMAGE

DIFFERENCE BETWEEN
TWO FRAMES

DIFFERENCE BETWEEN
TWO FRAMES

60AB

10A

DIFFERENCE IMAGE

60BC

10B

DIFFERENCE IMAGE

EP 3 499 477 A1

FIG.10

FIG.11

(A)

50

10 10

L

70A

HA

LA

(B)

50

10 10

L

70B

HB

LB

FIG.12

**FIG.13**

```
        ┌─────────────┐
        │    START    │
        └──────┬──────┘
               │
               ▼                    ┌─S110
    ┌──────────────────────────┐
    │   OBTAIN AN INPUT IMAGE   │
    └──────────┬───────────────┘
               │                    ┌─S112
    ┌──────────▼───────────────┐
    │   DETECT A PERSON REGION  │
    └──────────┬───────────────┘
               │                    ┌─S120
NO  ◄─────────◄  IS THE POSITION CONDITION
                  SATISFIED?  ►
               │ YES
               │                    ┌─S122
    ┌──────────▼───────────────┐
    │   DETECT A MOVING AMOUNT  │
    │   OF A CARE RECEIVER      │
    └──────────┬───────────────┘
               │                    ┌─S130
NO  ◄─────────◄  IS THE MOVING AMOUNT OF THE
                  CARE RECEIVER EQUAL TO OR LESS
                  THAN A PREDETERMINED VALUE?  ►
               │ YES
               │                    ┌─S132
    ┌──────────▼───────────────┐
    │ DEFINE AN AREA INCLUDING THE PERSON │
    │ REGION IN THE INPUT IMAGE │
    └──────────┬───────────────┘
               │                    ┌─S134
    ┌──────────▼───────────────┐
    │ START MEASURING THE MOTIONLESS TIME │
    └──────────┬───────────────┘
               │                    ┌─S140
NO  ◄─────────◄  DETERMINE WHETHER OR NOT
                  THE PERSON REGION IS PRESENT IN
                  THE DEFINED REGION  ►
               │ YES
               │                    ┌─S150
               ◄  IS THE MOTIONLESS
                  CONDITION SATISFIED?  ►──► NO
               │ YES
               │                    ┌─S152
    ┌──────────▼───────────────┐
    │   NOTIFY THAT THE CARE    │
    │   RECEIVER IS IN DANGER   │
    └──────────┬───────────────┘
               │
        ┌──────▼──────┐
        │     END     │
        └─────────────┘
```

## FIG.14

## INTERNATIONAL SEARCH REPORT

| International application No. |
| --- |
| PCT/JP2017/023972 |

A. CLASSIFICATION OF SUBJECT MATTER

*G08B25/04*(2006.01)i, *A61G12/00*(2006.01)i, *G08B21/04*(2006.01)i, *G08B25/00*(2006.01)i, *H04N7/18*(2006.01)i

According to International Patent Classification (IPC) or to both national classification and IPC

B. FIELDS SEARCHED

Minimum documentation searched (classification system followed by classification symbols)
G08B25/04, A61G12/00, G08B21/04, G08B25/00, H04N7/18

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2001-307246 A (Matsushita Electric Works, Ltd.),<br>02 November 2001 (02.11.2001),<br>paragraphs [0004] to [0010], [0030] to [0033];<br>fig. 1, 2, 11<br>(Family: none) | 1,2,4,5,7-10<br>3,6 |
| A | JP 2011-086286 A (Shimizu Corp.),<br>28 April 2011 (28.04.2011),<br>paragraphs [0010] to [0020]; fig. 1 to 3<br>& JP 2014-38667 A | 1-10 |
| A | JP 2016-067641 A (Tokyo Electron Device Ltd.),<br>09 May 2016 (09.05.2016),<br>paragraphs [0009], [0012], [0026] to [0033];<br>fig. 1, 6, 7<br>(Family: none) | 1-10 |

[X] Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 05 September 2017 (05.09.17) | 12 September 2017 (12.09.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**INTERNATIONAL SEARCH REPORT**

International application No.

PCT/JP2017/023972

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-052631 A (Matsushita Electric Works, Ltd.), 06 March 2008 (06.03.2008), paragraphs [0016] to [0037]; fig. 1 to 7 (Family: none) | 1-10 |

Form PCT/ISA/210 (continuation of second sheet) (January 2015)

**EP 3 499 477 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000207665 A